**Europäisches Patentamt**

**European Patent Office**

**Office européen des brevets**

(19)

(11) Veröffentlichungsnummer: **0 099 443**
A2

(12) # EUROPÄISCHE PATENTANMELDUNG

(21) Anmeldenummer: **83101460.0**

(51) Int. Cl.³: **B 01 J 3/04**

(22) Anmeldetag: **16.02.83**

(30) Priorität: **23.07.82 DE 3227545**

(43) Veröffentlichungstag der Anmeldung:
**01.02.84 Patentblatt 84/5**

(84) Benannte Vertragsstaaten:
**AT BE CH DE FR GB IT LI LU NL SE**

(71) Anmelder: **Uhde GmbH**
**Friedrich-Uhde-Strasse 15 Postfach 262**
**D-4600 Dortmund 1(DE)**

(72) Erfinder: **Minning, Rudolf**
**Althoffstrasse 36**
**D-4600 Dortmund 1(DE)**

(72) Erfinder: **Saamer, Peter, Dipl.-Ing.**
**Letteweg 36**
**D-5860 Iserlohn-Hennen(DE)**

(72) Erfinder: **Körner, Jörg-Peter, Dipl.-Ing.**
**Baurothstrasse 7**
**D-5800 Hagen 1(DE)**

(74) Vertreter: **Patentanwälte Meinke und Dabringhaus**
**Dipl.-Ing. J. Meinke Dipl.-Ing. W. Dabringhaus**
**Westenhellweg 67**
**D-4600 Dortmund 1(DE)**

(54) **Hochdruckautoklav.**

(57) Bei einem Hochdruckautoklav (1) mit einem von einem Dekkel abschließbaren Druckgefäß (3), wobei wenigstens die Außenwand des Druckgefäßes von einem Wärmeübertragungsmedium bereichsweise beaufschlagbar ist, soll eine Lösung geschaffen werden, mit der Hochdruckautoklaven den unterschiedlichen physikalischen und chemischen Betriebsparametern besser anpaßbar, insbesondere wirtschaftlicher in der Herstellung sind, ohne die Vorteile der bekannten Hochdruckautoklaven aufgeben zu müssen. Dies wird dadurch erreicht, daß das Druckgefäß (3) auf seiner Innenseite mit einem zu seiner Innenwand (7) einen Abstand aufweisenden Hemd (6) ausgerüstet ist, wobei zwischen der Außenwand (8) des Hemdes (6) und der Innenwand (7) des Druckgefäßes (3) Abstandhalterelemente (10) vorgesehen sind.

FIG. 1

EP 0 099 443 A2

"Hochdruckautoklav"

Die Erfindung richtet sich auf einen Hochdruckautoklav mit einem von einem Deckel abschließbaren Druckgefäß, wobei wenigstens die Außenwand des Druckgefäßes von einem Wärmeübertragungsmedium bereichsweise beaufschlagbar ist.

Derartige Hochdruckautoklaven werden heute vielfach eingesetzt, insbesondere bei Prozessen mit sog. Hochdruckreaktionen. Bei Sonderautoklaven sind Drücke von über 1500 bar keine Seltenheit. Die Hochdruckautoklaven, im Regelfall liegen die Drücke dort bei 100 und mehr bar, müssen, je nach Einsatzgebiet, den unterschiedlichsten Betriebsbedingungen angepaßt sein. Derartige Betriebsparameter sind neben Druck und Temperatur insbesondere auch das chemische Verhalten des Mediums im Autoklaven, was häufig sehr aufwendige Konstruktionen bedingt. Da vom Deckel auf das Druckgefäß bzw. dessen Flansch Zugkräfte und vom Innendruck entsprechende Druckkräfte ebenso ausgeübt werden, wie evtl. besondere Belastungen durch das chemische Verhalten des im inneren befindlichen Mediums, muß der Behälter für diese Einflüsse ausgelegt sein, ebenso wie für eine Temperaturbeaufschlagung z.B. durch Beheizung oder Kühlung.

Von einem Wärmetauschermedium, z.B. Wärmeträgeröl, außen beaufschlagte Druckgefäß sind z.B. aus einer Druckschrift

0099443

"Autoklaven und Drehrührwerke" der Anmelderin bekannt.

Aufgabe der Erfindung ist die Schaffung einer Lösung, mit der Hochdruckautoklaven den unterschiedlichen physikalischen und chemischen Betriebsparametern besser anpaßbar, insbesondere wirtschaftlicher in der Herstellung sind ohne die Vorteile der bekannten Hochdruckautoklaven aufgeben zu müssen.

Bei einem Hochdruckautoklav der eingangs bezeichneten Art wird diese Aufgabe gemäß der Erfindung dadurch gelöst, daß das Druckgefäß auf seiner Innenseite mit einem zu seiner Innenwand einen Abstand aufweisenden Hemd ausgerüstet ist, wobei zwischen der Außenwand des Hemdes und der Innenwand des Druckgefäßes Abstandhalterelemente vorgesehen sind.

Der erfindungsgemäße Wandaufbau des Druckgefäßes macht es z.B. möglich, das Hemd aus einer besonderen Stahllegierung oder einem sonstigen Material zu fertigen, das insbesondere den Parametern des im Inneren befindlichen Mediums gerecht wird, ohne daß dessen Wandstärke so ausgelegt werden müßte, daß der Innendruck dort aufgefangen wird. Andererseits entlastet das Hemd das Druckgefäß selbst von diesen Einflüssen. Das Druckgefäß braucht daher zunächst nur noch den von den Abstandhalterelementen auf seiner Innenwand übertragenen Drücken standzuhalten und ggf. den von dem oder den Deckeln ausgeübten Zugkräften.

Die Erfindung sieht auch vor, daß die Abstandhalterelemen-

- 3 - 0099443

te kugelförmig und/oder zylindrisch und/oder spiralförmig und/oder ringförmig und/oder netzartig ausgebildet sind. Für die Erfindung besonders wesentlich ist, die Abstandhalterelemente als Stahlkugeln auszubilden, die in den Ringraum zwischen Hemd und Druckgefäß einfüllbar sind und dort in optimaler Weise für eine Druckübertragung vom Hemd auf das Druckgefäß sorgen können, wobei sich mit der Ausgestaltung als Kugeln eine besonders dichte Packung der Abstandhalterelemente erreichen läßt.

Die Abstandhalterelemente können natürlich auch zylindrisch oder spiralförmig, z.B. aus Feder-Rundstahl, gefertigt sein. Sie können auch von einem Netz gebildet werden u. dgl. mehr.

Zweckmäßig sollten die Abstandhalterelemente allerdings gewährleisten, daß der Raum zwischen der Druckgefäßinnenwand und der Hemdaußenwand von einem Wärmeübertragungsmedium beaufschlagbar ist, wie dies die Erfindung in weiterer Ausgestaltung ebenfalls vorsieht. Bei diesem Wärmeübertragungsmedium ist vorzugsweise an ein förderbares Medium, wie ein Fluid gedacht, welches z.B. die Freiräume zwischen den Abstandhalter-Kugeln durchströmen kann.

Vorteilhaft kann es sein, wenn das Druckgefäß, wie an sich bekannt, mit einem auf Abstand befindlichen Außenmantel zur Bildung eines Durchgangsraumes des Wärmeübertragungsmediums vorgesehen ist, wenn der Raum zwischen Druckgefäßinnenwand und Hemdaußenwand sowie der Durchgangsraum zur Bildung eines gemeinsamen Strömungsraumes für das Wärmeübertragungsmedium miteinander verbunden sind. Die Führung des Wärmeübertragungsmediums kann dabei je nach Zweckmäßigkeit an der Innenwand des Druckgefäßes und der Außenwand des Druckgefäßes im Gegen- oder Gleichstrom geführt sein.

Eine weitere, für die Erfindung wesentliche Gestaltung besteht/darin, daß der das Druckgefäß umgebende Mantel als den durch den oder die Abschlußdeckel des Hochdruckautoklaven aufgebrachten Zug aufnehmendes Element ausgebildet ist. Mit dieser Ausgestaltung wird erreicht, daß das Druckgefäß selbst nur noch zur Aufnahme des Autoklaveninnendruckes ausgelegt zu werden braucht, während die sonstigen, vom Inneren herrührenden Belastungen vom Hemd und die vom Deckel oder den Deckeln herrührende Zugbelastung vom Mantel aufgenommen wird.

Eine fertigungstechnisch besonders günstige Gestaltung des Hochdruckautoklaven besteht darin, daß das Druckgefäß als beidseitig von einem Deckel verschlossenes, zylindrisches Bauteil mit im wesentlichen zylindrischem Außenmantel und Hemd ausgebildet ist.

Weitere Merkmale, Vorteile und Ausgestaltungen der Erfindung ergeben sich aufgrund der nachfolgenden Beschreibung sowie anhand der Zeichnung. Diese zeigt als Schnitt in den

Fig. 1, linke und rechte Figurenhälfte, zwei Ausführungsbeispiele von Hochdruckautoklaven mit einem Deckel und

Fig. 2 einen zylindrischen Hochdruckautoklaven mit beidseitigen Deckeln.

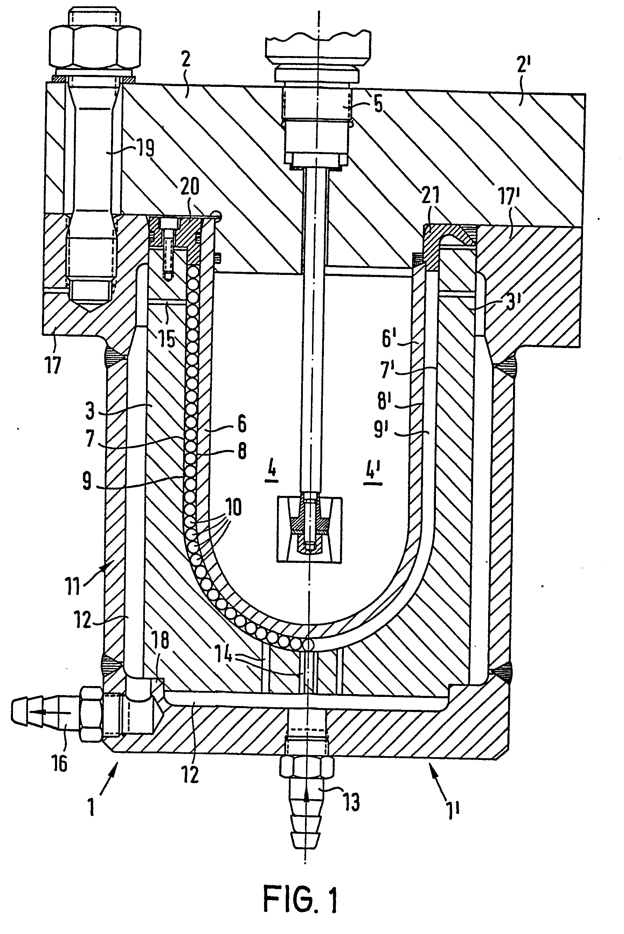

Der in den Figuren allgemein mit 1 bezeichnete Hochdruckautoklav besteht bei den beiden Ausführungsbeispielen nach Fig. 1 im wesentlichen aus einem von einem Deckel 2 abgeschlossenen Druckgefäß 3. In den Innen- bzw. Reaktionsraum 4 des Hochdruckautoklaven 1 ragt im dargestellten Beispiel ein Rührer 5 durch eine entsprechende Ausnehmung im Deckel 2, hierauf kommt es für die vorliegende Erfindung nicht an. In gleicher Weise können neben dem Rührer 5 auch noch Injektionsbohrungen im Deckel 2 vorgesehen sein u. dgl. mehr. (Gleiche Bauteile sind in der rechten Figurenhälfte einmal gestrichen bezeichnet, z.B. Deckel 2', Innenraum 4' u. dgl.).

Wesentlich für die Erfindung ist der sonstige Aufbau des Druckgefäßes 3. Dieses ist mit einem innenliegenden Hemd 6 ausgerüstet, welches so bemessen ist, daß zwischen der mit 7 bezeichneten Innenwand des Druckgefäßes 3 und der mit 8 bezeichneten Außenwand des Hemdes 6 ein Raum 9 gebildet ist, welcher mit Abstandhalterelementen 10, im dargestellten Beispiel Kugeln, derart ausfüllbar ist, daß die Abstandhalterelemente 10 sowohl die Innenwand 7 des Druckgefäßes 3 als auch die Außenwand 8 des Hemdes 6 bereichsweise berühren.

Das Druckgefäß 3 ist mit einem Außenmantel 11 ausgerüstet, der sich im wesentlichen umlaufend auf einen Abstand zur Außenwand des Druckgefäßes 3 befindet und damit einen Durchgangsraum 12 für ein Wärmeübertragungsmedium, z.B. ein Heiz- oder Kühlöl, bildet.

Wie sich aus Fig. 1 ergibt, ist der Durchgangsraum für das Wärmeübertragungsmedium am Boden des Druckgefäßes mit einem Zuführstutzen 13 für das Wärmeübertragungsmedium ausgerüstet, der Durchgangsraum 12 steht über Bohrungen 14 im Boden des Druckgefäßes 3 mit dem von Kugeln gefüllten Raum 9 in Verbindung. An dem dem Deckel 2 benachbarten Bereich des Druckgefäßes sind Verbindungsbohrungen 15 in der Druckgefäßwand vorgesehen, mit denen der Raum 9 mit dem Durchgangsraum 12 verbunden ist. Im Bereich des Bodens des Hochdruckautoklaven 1 ist der Raum 12 mit einem Ablaßstutzen 16 für das Wärmeübertragungsmedium ausgerüstet. Erkennbar wird bei Zugabe von Wärmeübertragungsmedium über den Zuführstutzen 13 das Druckgefäß 3 im Gegenstrom umspült und zwar innen über die Verbindungsbohrung 14 den Raum 9 nach oben zu den Verbindungsbohrungen 15 und dann abwärts durch den Raum 12 zum Ablaßstutzen 16.

Der Außenmantel 11 ist im dargestellten Beispiel als Schweißkonstruktion ausgebildet und hat an dem dem Deckel benachbarten Bereich einen Flansch 17 und im Bodenbereich eine Auflageschulter 18. Die Auflageschulter 18 stützt sich am Druckgefäß 3 ab, während der Flansch 17 zur Aufnahme von Spannschrauben 19 ausgelegt ist. Beim Anziehen der Spannschrauben 19 wird die Zugkraft über den Flansch 17 lediglich in den Außenmantel 11 eingeleitet, der sich über die Schulter 18 am Druckgefäß 3 unten abstützt.

Im Beispiel nach der linken Figurenhälfte ist das Hemd 6 lose eingelegt über Ringdichtungen gegen den Deckel und gegen einen Kugelrückhalteflansch 20 abgedichtet. Durch Anziehen der Spannschrauben 19 werden alle Elemente aneinander festgelegt und zentriert.

Im Fall des rechten Ausführungsbeispieles ist das Hemd 6' am Flansch 17' über einen Kragen 21 festgelegt, wobei der Kragen 21 gleichzeitig den Kugelrückhalteflansch bildet.

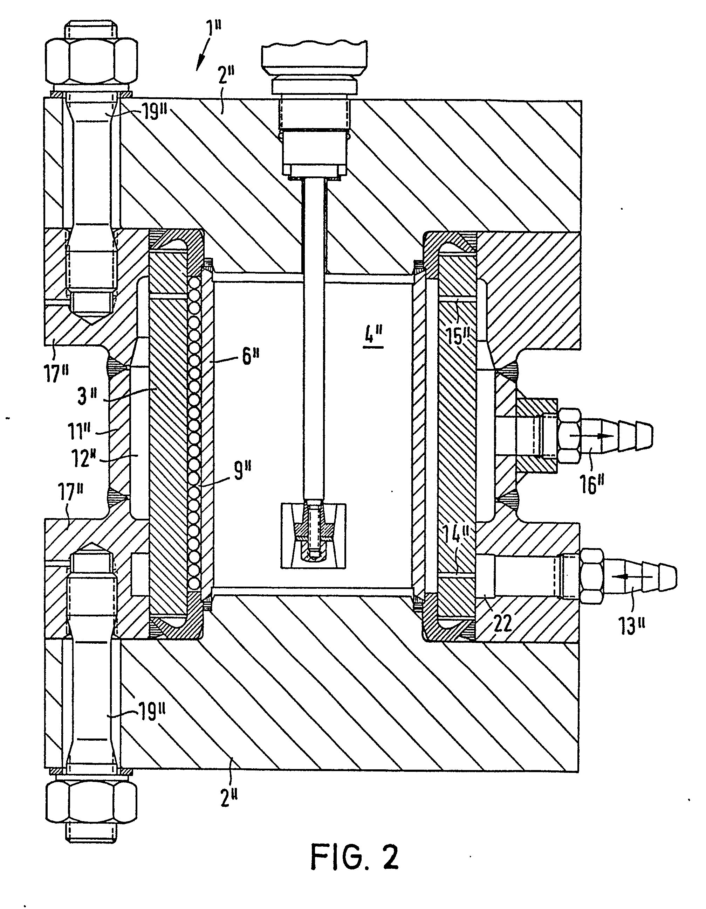

Beim Ausführungsbeispiel nach Fig. 2 sind die funktionsmäßig gleichen Teile mit den gleichen Bezugsziffern in den Fig. 1 und 2 bezeichnet, allerdings 2-fach gestrichen.

Der dort wiedergegebene Hochdruckautoklav 1" weist beidseitig Deckel 2" auf, die ein zylinderförmiges Druckgefäß 3" mit einem zylinderförmigen Hemd 6" und einem im wesentlichen zylindrischen Außenmantel 11" zwischen sich einschließen. Der Außenmantel 11" trägt beidseitig je einen Flansch 17", an dem die beiden Deckel beidseitig über Spannschrauben 19" verspannt werden.

Die Bildung des Raumes 9" und des Durchgangsraumes 12" ist im wesentlichen die gleiche wie in Fig. 1.

Die Anordnung des Zuführstutzens 13" und des Ablaßstutzens 16" ist bei diesem Ausführungsbeispiel anders vorgesehen. Der Zuführstutzen 13" ist im einen Flansch 17" angeordnet. Dieser Flansch weist eine Ringnut 22 auf, von der Bohrungen 14" zum Raum 9" führen. Am entgegengesetzten Ende des Raumes 9" sind Verbindungsbohrungen 15" vorgesehen, die den Raum 9" mit dem Durchgangsraum 12" verbinden. In der zylindrischen Wand des Außenmantels 11 ist an einer Stelle der Ablaßstutzen 16" vorgesehen, so daß im wesentlichen wiederum das Wärmeübertragungsmedium im Gegenstrom das Druckgefäß 3" umspült.

Natürlich ist das beschriebene Ausführungsbeispiel noch in vielfacher Hinsicht abzuändern, ohne den Grundgedanken der Erfindung zu verlassen. So ist die Erfindung insbesondere nicht auf die Kugelform der Abstandhalterelemente 10 beschränkt. In gleicher Weise können hier walzenförmige oder spiralförmige oder sonstige Elemente vorgesehen sein, die zum einen eine optimale Drückübertragung vom Mantel 6 auf das Druckgefäß 3 gewährleisten, gleichzeitig aber auch einen Durchströmraum 9 für das Wämeübertragungsmedium offenhalten. Wenn dies aus Gründen von spezifischen Materialeigenschaften notwendig sein sollte, kann die Erfindung auch bei Wandaufbauten mit einer Mehrzahl von ineinander eingesetzten Wandelementen vorgesehen sein, z.B. ein Vierfachwandaufbau u. dgl. mehr. Auch kann, wenn nötig, zwischen Außenmantel und Druckgefäß vorgesehen sein, weitere Abstandhalterelemente vorzusehen u. dgl. mehr.

Ansprüche :

1. Hochdruckautoklav mit einem von einem Deckel abschließbaren Druckgefäß, wobei wenigstens die Außenwand des Druckgefäßes von einem Wärmeübertragungsmedium bereichsweise beaufschlagbar ist, dadurch gekennzeichnet, daß das Druckgefäß (3) auf seiner Innenseite mit einem zu seiner Innenwand (7) einen Abstand aufweisenden Hemd (6) ausgerüstet ist, wobei zwischen der Außenwand (8) des Hemdes (6) und der Innenwand (7) des Druckgefäßes (3) Abstandhalterelemente (10) vorgesehen sind.

2. Vorrichtung nach Anspruch 1, dadurch gekennzeichnet, daß die Abstandhalterelemente (10) kugelförmig und/oder zylindrisch und/oder spiralförmig und/oder ringförmig und/oder netzartig ausgebildet sind.

3. Vorrichtung nach einem der vorangehenden Ansprüche, dadurch gekennzeichnet, daß der Raum (9) zwischen der Druckgefäßinnenwand (7) und der Hemdaußenwand (8) von einem Wärmeübertragungsmedium beaufschlagbar ist.

4. Vorrichtung nach Anspruch 3, dadurch gekennzeichnet, daß das Druckgefäß (3), wie an sich bekannt, mit einem auf Abstand befindlichen Außenmantel (11) zur Bildung eines Durchgangsraumes (12) für das Wärmeübertragungsmedium versehen ist und daß der Raum (9) zwischen Druckgefäßinnenwand (7) und Hemdaußenwand (8) sowie der Durchgangsraum (12) zur Bildung eines gemeinsamen Strömungsraumes
für das Wärmeübertragungsmedium miteinander verbunden
sind.

5. Vorrichtung nach einem der vorangehenden Ansprüche, dadurch gekennzeichnet, daß der das Druckgefäß (3) umgebende Mantel (11) als den durch den oder die Abschlußdeckel
(2) des Hochdruckautoklaven (1) aufgebrachten Zug aufnehmendes Element ausgebildet ist.

6. Vorrichtung nach einem der vorangehenden Ansprüche, dadurch gekennzeichnet, daß das Druckgefäß (3") als beidseitig von einem Deckel (2") verschlossenes, zylindrisches
Bauteil mit im wesentlichen zylindrischem Außenmantel (11")
und Hemd (6") ausgebildet ist.

0099443

FIG. 1

33/4172

0099443

FIG. 2

33/4172